# EUROPÄISCHE PATENTSCHRIFT

(11) **EP 3 219 943 B1**
(45) Veröffentlichungstag und Bekanntmachung des Hinweises auf die Patenterteilung: **25.09.2019**
(21) Anmeldenummer: 17159492.2
(22) Anmeldetag: 07.03.2017
(51) Int. Cl.: F01L 1/344, F16K 11/07, F16K 15/18, F16K 15/02

(54) **KOLBEN FÜR EIN HYDRAULIKVENTIL EINES SCHWENKMOTORVERSTELLERS UND HYDRAULIKVENTIL FÜR EINEN SCHWENKMOTORVERSTELLER EINER NOCKENWELLE**
PISTON FOR A HYDRAULIC VALVE OF A HYDRAULIC VALVE FOR A PIVOTING MOTOR ADJUSTER AND HYDRAULIC VALVE FOR A PIVOTING MOTOR ADJUSTER OF A CAMSHAFT
PISTON POUR UNE SOUPAPE HYDRAULIQUE D'UN MOTEUR OSCILLANT ET SOUPAPE HYDRAULIQUE POUR UN MOTEUR OSCILLANT D'UN ARBRE À CAME

(30) Priorität: 14.03.2016 US 201662307745 P; 26.11.2016 US 201615361404
(43) Veröffentlichungstag der Anmeldung: 20.09.2017
(73) Patentinhaber: ECO Holding 1 GmbH, 97828 Marktheidenfeld (DE)
(72) Erfinder: Brower, Brent, Muskegon, Michigan 49445 (US); Stanhope, Daniel, Nunica, Michigan 49448 (US)

(56) Entgegenhaltungen:
- EP-A1- 2 466 081
- EP-A1- 2 977 569
- DE-A1-102008 043 179
- DE-A1-102008 055 175
- DE-T2-602005 000 504

## Beschreibung

Die Erfindung betrifft ein Hydraulikventil für einen Schwenkmotorversteller einer Nockenwelle nach dem Patentanspruch 1.

Hydraulikventile für Schwenkmotorenversteller von Nockenwellen für Verbrennungsmotoren sind wohlbekannt. Das Hydraulikventil weist einen in einem Gehäuse des Hydraulikventils axial bewegbaren Kolben auf, mit dessen Hilfe eine hydraulische Beaufschlagung des Schwenkmotorverstellers geregelt wird. Es gibt Hydraulikventile unterschiedlicher Bauarten. Das Gehäuse ist hohlzylinderformartig ausgebildet. Der Kolben ist ebenfalls hohlzylindrisch ausgestaltet. Die Regelung des Schwenkmotorverstellers erfolgt hydraulisch mit Hilfe der Positionierung des durchströmbaren Kolbens und einer entsprechenden Freigabe oder Verschließen von am Gehäuse ausgebildeten Anschlüssen.

Den Offenlegungsschriften DE 10 2013 104 573 A1 und DE 10 2013 104 575 A1 ist ein Hydraulikventil zu entnehmen, welches einen Versorgungsanschluss an einem Gehäuseende aufweist, derart, dass eine direkte Anströmung des im Gehäuse aufgenommenen Kolbens und somit eine geradlinige Beaufschlagung des Kolbens mit über dem Versorgungsanschluss zugeführten Hydraulikfluid herbeiführbar ist. Der Kolben weist eine komplexe Außengeometrie auf, damit eine Rückströmung in den Kolben aus den Arbeitsanschlüssen vermieden wird.

Aus den Offenlegungsschriften US 2014/0311333 A1 und US 2014/0311594 A1 geht ein Hydraulikventil hervor, welches an einem Umfang des Kolbens ausgebildete Rückschlagventile aufweist. Dadurch wird entweder eine aufwendig Gehäusegestaltung zur Aufnahme und Sicherung der Rückschlagventile notwendig, oder das Gehäuse ist mehrteilig aufgebaut und erfordert einen hohen Montageaufwand. Der Kolben ist mehrteilig aufgebaut und die einzelnen Bauteile müssen konzentrisch gefügt werden, wodurch eine aufwendige Montage aufgrund der Vermeidung einer Desachsierung beim Verpressen der Teile notwendig ist.

Ein weiteres Hydraulikventil, welches eine so genannte Mittenpositionsverriegelung aufweist, ist der Offenlegungsschrift EP 2 966 272 A2 zu entnehmen. Der Kolben weist aufgrund der im Gehäuse des Hydraulikventils zusätzlich angeordneten Verriegelungsanschlüsse eine komplexe Außengeometrie auf.

Der Offenlegungsschrift DE 10 2008 055 175 A1 ist ein gattungsgemäßes Hydraulikventil mit zwei im Kolben angeordneten Rückschlagventilen zu entnehmen. Diese sind als Kugelsitzventile ausgebildet, wobei ein Abstandselement zwischen den beiden Rückschlagventilen vorgesehen ist.

Auch der Offenlegungsschrift DE 10 2008 043 179 A1 ist ein Hydraulikventil mit zwei im Kolben angeordneten Rückschlagventilen zu entnehmen. Ein Abstandselement zwischen den Rückschlagventilen kann entfallen, da die Schließelemente in einem gemeinsamen Ventilsitz angeordnet sind.

Der EP 2 466 081 A1 ist ein Hydraulikventil mit Rückschlagventilen zu entnehmen, welche als bandförmige Rückschlagventile an einer Buchseninnenseite angeordnet sind.

Aus der EP 2 977 569 A1 ist ein Hydraulikventil bekannt, welches ein Phasenrückschlagventil im Innenbereich des Kolbens aufweist. Der Kolben weist in einer Bohrung ein Phasenvolumen und ein davon fluidmäßig getrenntes Flutvolumen auf. In Abhängigkeit von der Kolbenposition ermöglicht das Phasenrückschlagventil einen Fluidaustausch zwischen Kammern eines Nockenwellenverstellers.

Weiter ist aus der DE 60 2005 000 504 T2 ein Hydraulikventil mit Rückschlagventilen zu entnehmen, welche am Kolben angeordnet sind.

Eine Aufgabe der vorliegenden Erfindung ist es, ein Hydraulikventil für einen Schwenkmotorversteller bereitzustellen, welcher betriebssicher bei gleichzeitig kostengünstiger Herstellung ist.

Die Aufgabe wird erfindungsgemäß durch ein Hydraulikventil für einen Schwenkmotorversteller mit den Merkmalen des Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Das erfindungsgemäße Hydraulikventil umfasst ein Gehäuse und einen sich in einer entlang der ersten Längsachse des Gehäuses erstreckenden Zentralöffnung axial bewegbaren Kolben. Entsprechend einer Positionierung des Kolbens werden insbesondere Arbeitsanschlüsse des Gehäuses geöffnet und gesperrt. Der Kolben weist zur Vermeidung eines unerwünschten Ausströmens eines den Kolben durchströmenden Hydraulikfluids aus einem Innenraum des Kolbens in dem Arbeitsanschlüssen zugeordnete Durchströmöffnungen des Kolbens Rückschlagventile auf, wobei die Rückschlagventile im Innenraum des Kolbens angeordnet und mit Hilfe eines Abstandselements fixiert sind.

Der Kolben ist hohlzylinderförmig ausgeführt. Erfindungsgemäß weist das Abstandselement einen kreuz- oder sternförmigen Querschnitt auf.

Die Anordnung der Rückschlagventile im Innenraum des Kolbens führt zu einem Kolben, dessen Außengeometrie kostengünstig herstellbar ist, wobei mit Hilfe der Rückschlagventile ein ungewolltes Überströmen des Hydraulikfluids vermieden wird.

Die Rückschlagventile sind dazu vorgesehen, die Anschlussöffnungen gegenüber einer ungewollten gegenseitigen Durchströmung zu verhindern. Dies kann insbesondere bei pulsartigen Hydraulikdrücken auftreten. Das bedeutet, dass entweder das Gehäuse pro Arbeitsanschluss zwei Anschlussöffnungen aufweisen muss oder der Kolben mit einer aufwendigen Nutgeometrie ausgestaltet ist, damit eine Befüllung und Entleerung von Druckkammern des Schwenkmotorverstellers zeitgleich erfolgen kann.

Das Abstandselement dient der Fixierung der Rückschlagventile und Abstandssicherung der Rückschlagventile zueinander im Innenraum des Kolbens. Somit kann mit Hilfe des Abstandselementes eine komplexe Innengeometrie des Kolbens vermieden werden, welche notwendig wäre um die Rückschlagventile zu fixieren. Durch die Aufnahme der Rückschlagventile im Innenraum und der Fixierung mit Hilfe des Abstandselements kann der Kolben in einem Stück hergestellt werden. Somit ist eine kostengünstige Fertigung des Kolbens realisierbar, da ein aufwendiger Zusammenbau des Kolbens mit entfällt.

Durch den kreuz- oder sternförmigen Querschnitt des Abstandselements können Strömungskanäle im Abstandselement derart ausgebildet werden, dass ausgehend von den den Arbeitsanschlüssen zugeordneten Durchströmöffnungen eine gezielte Umlenkung des Hydraulikfluids im Innenraum herbeigeführt wird. Ist bspw. der Kolben zur Befüllung einer mit dem einen Arbeitsanschluss verbundenen Druckkammer positioniert, strömt ausgehend von dem Innenraum das über den Versorgungsanschluss einströmende Hydraulikfluid in die dem Arbeitsanschluss zugeordnete Durchströmöffnung. Über den anderen Arbeitsanschluss strömt zumindest teilweise Hydraulikfluid aus dessen ihm zugeordnete Druckkammer über das Rückschlagventil in den Innenraum. Mit Hilfe der im Abstandselement ausgebildeten Strömungskanäle wird dieses Hydraulikfluid direkt in die Durchströmöffnung des Arbeitsanschlusses geleitet, über den die Befüllung stattfindet. Das Hydraulikfluid kann sich nicht zuerst im gesamten Innenraum ausbreiten, sondern wird ausgehend von der Durchströmöffnung, welche dem Arbeitsanschluss der zu entleerenden Druckkammer zugeordnet ist, direkt in die Durchströmöffnung geleitet, die dem Arbeitsanschluss der zu befüllenden Druckkammer zugeordnet ist. Dadurch ist eine schnellere Befüllung realisiert und somit eine Reaktionszeit des Schwenkmotorverstellers reduziert.

Zur Unterstützung der Einführung des Abstandselementes in den Kolben während der Montage, weist es an zumindest einer Seitenflächenkante eine Fase auf oder die Seitenflächenkante ist abgerundet ausgeführt.

Es hat sich als für die Montage des Hydraulikventils besonders geeignet erwiesen, die Fase mit einem Winkel mit einem Wert von 15° auszubilden. Größere Winkel könnten in der Montage zu einem Verkanten und Klemmen des Abstandselementes führen. Ein Winkel mit einem kleineren Wert, insbesondere kleiner als 10°, erbringt kein weiter verbessertes Einführen des Abstandselementes.

In einer weiteren Ausgestaltung ist eine Außenfläche des Abstandselementes einem Innendurchmesser des Kolbens angepasst ausgebildet. Dadurch kann einerseits vorteilhaft eine weitestgehend vollständige Trennung der mit Hilfe des Abstandselementes ausgebildeten Strömungskanäle herbeigeführt werden. Andererseits kann das Abstandselement aufgrund einer Oberflächenreibung während der Montage sicher im Kolben gehalten werden.

Das erfindungsgemäße Hydraulikventil ist flexibel bei der Modifizierung von Durchströmöffnungen relativ zu einem Kolbenweg und somit kann bei bspw. Hydraulikventilen, welche pro Arbeitsanschluss zumindest zwei Anschlussöffnungen aufweisen, die Anzahl der Anschlussöffnungen auf eine Anschlussöffnung pro Arbeitsanschluss reduziert werden. Dies ist darin begründet, dass das erfindungsgemäße Hydraulikventil mit dem Kolben bewegbare Rückschlagventile aufweist, die sich relativ zu den Anschlussöffnungen bewegen, wohingegen beim Hydraulikventil gemäß dem Stand der Technik die Rückschlagventile fixiert sind.

Des Weiteren kann der Kolben aufgrund seiner einfach herzustellenden Außengeometrie in seiner Grundgeometrie für unterschiedliche Bauvarianten des Hydraulikventils eingesetzt werden, so dass aufwendige Entwicklungsarbeiten vermieden werden können. Damit ist das Hydraulikventil kostengünstig herstellbar.

In einer Ausgestaltung des erfindungsgemäßen Hydraulikventils ist der Versorgungsanschluss an einem ersten Ende des rohrformartig ausgebildeten Gehäuses angeordnet, wodurch der Kolben vorteilhaft direkt und ohne verlustreduzierende Strömungsumlenkung anströmbar ist. Dies fördert eine Reaktionszeit bzw. eine Reaktionsgeschwindigkeit des Schwenkmotorverstellers.

In einer weiteren Ausgestaltung weist das Hydraulikventil weitere Anschlussöffnungen zur Regelung eines Schwenkmotorverstellers mit einer Mittenpositionsverriegelung auf. Der Vorteil dieses erfindungsgemäßen Hydraulikventils ist im Vergleich mit einem Hydraulikventil gemäß dem Stand der Technik, das für einen Schwenkmotorversteller mit einer Mittenpositionsverriegelung vorgesehen ist, in einem wesentlich verringerten Bauraum zu sehen. Somit kann ein kompakter Schwenkmotorversteller realisiert werden, der gegenüber einem Schwenkmotorversteller mit einer Mittenpositionsverriegelung gemäß dem Stand der Technik einen reduzierten Bauraumbedarf aufweist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
Fig. 1 in einer perspektivischen Darstellung ein erfindungsgemäßes Hydraulikventil für einen Schwenkmotorversteller einer Nockenwelle in einem ersten Ausführungsbeispiel,
Fig. 2 in einer weiteren perspektivischen Darstellung das Hydraulikventil gem. Fig. 1,
Fig. 3 in einem Längsschnitt das Hydraulikventil gem. Fig. 1,
Fig. 4 in einer Explosionsdarstellung das Hydraulikventil gem. Fig. 1,
Fig. 5 in einer symbolischen Darstellung das Hydraulikventil gem. Fig. 1 in verschiedenen Positionen,
Fig. 6 in einem Längsschnitt das Hydraulikventil gem. Fig. 1 in einer ersten Position,
Fig. 7 in einem Längsschnitt das Hydraulikventil gem. Fig. 1 in einer zweiten Position,
Fig. 8 in einem Längsschnitt das Hydraulikventil gem. Fig. 1 in einer dritten Position,
Fig. 9a) in einer perspektivischen Darstellung ein Abstandselement des erfindungsgemäßen Hydraulikventils gem. Fig. 1,
Fig. 9b) in einer Draufsicht den Abstandselement gem. Fig. 9a),
Fig. 9c) in einem Schnitt entlang der Schnittlinie IXc)-IXc) den Abstandselement gem. Fig. 9a),
Fig. 9d) in einer Seitenansicht den Abstandselement gem. Fig. 9a),
Fig. 10 in einer perspektivischen Darstellung einen Kolben des Hydraulikventils gem. Fig. 1,
Fig. 11 in einer Transparenzansicht den Kolben gem. Fig. 10,
Fig. 12 in einer symbolischen Darstellung das Hydraulikventil in einem zweiten Ausführungsbeispiel in verschiedenen Positionen,
Fig. 13 in einem Längsschnitt das Hydraulikventil gem. Fig. 12 in einer ersten Position,
Fig. 14 in einem Längsschnitt das Hydraulikventil gem. Fig. 12 in einer zweiten Position,
Fig. 15 in einem Längsschnitt das Hydraulikventil gem. Fig. 12 in einer dritten Position,
Fig. 16 in einem Längsschnitt das Hydraulikventil gem. Fig. 12 in einer vierten Position,
Fig. 17 in einer perspektivischen Darstellung einen Kolben des Hydraulikventils gem. Fig. 12, und
Fig. 18 in einer Transparenzansicht den Kolben gem. Fig. 17.

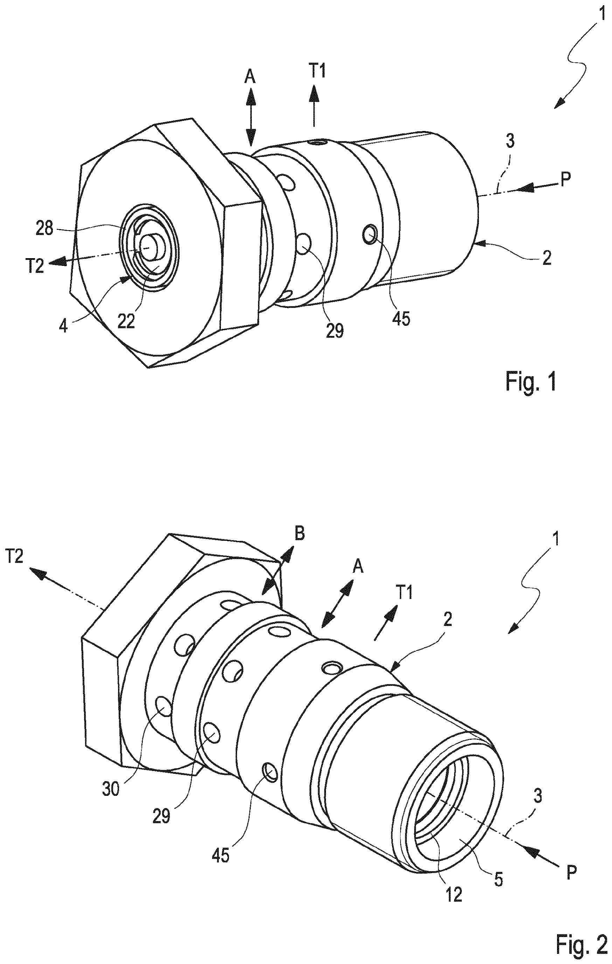

Ein erfindungsgemäßes Hydraulikventil 1 für einen nicht näher dargestellten Schwenkmotorversteller einer nicht näher dargestellten Nockenwelle ist in einem ersten Ausführungsbeispiel gemäß Fig. 1 ausgebildet. Das Hydraulikventil 1 ist zur Aufnahme in einem nicht näher dargestellten Rotor des Schwenkmotorherstellers als Zentralventil ausgeführt. D.h. mit anderen Worten, dass das Hydraulikventil 1 in einer zentralen Öffnung des Schwenkmotorverstellers von diesem zumindest teilweise umfassend aufgenommen ist.

Das Hydraulikventil 1 weist ein Gehäuse 2 auf, welches durchströmbar ausgebildet ist. Zur hydraulischen Versorgung des Schwenkmotorverstellers sind mehrere Anschlüsse A, B, P, T1, T2 am Gehäuse 2 vorgesehen. Im Gehäuse 2 ist ein entlang einer ersten Längsachse 3 des Hydraulikventils 1 axial bewegbarer Kolben 4 in einer Zentralöffnung 5 des Gehäuses 2 aufgenommen. Das Gehäuse 2 ist überwiegend rohrformartig ausgeführt.

Der Schwenkmotorversteller erlaubt während des Betriebes eines nicht näher dargestellten Verbrennungsmotors eine Änderung von Öffnungs- und Schließzeiten von Gaswechselventilen des Verbrennungsmotors herbeizuführen. Hierzu wird mit Hilfe des Schwenkmotorverstellers eine relative Winkellage einer nicht näher dargestellten Nockenwelle des Verbrennungsmotors gegenüber einer nicht näher dargestellten Kurbelwelle des Verbrennungsmotors stufenlos verändert, wobei die Nockenwelle relativ zur Kurbelwelle verdreht wird. Durch Verdrehen der Nockenwelle werden die Öffnungs- und Schließzeitpunkte der Gaswechselventile so verschoben, dass der Verbrennungsmotor bei der jeweiligen Drehzahl seine optimale Leistung erbringen kann.

Ein nicht näher dargestellter Stator des Schwenkmotorverstellers ist drehfest mit einem nicht näher dargestellten Antriebsrad der Nockenwelle verbunden. An Innenseiten eines Statorgrundkörpers sind sich radial nach innen erstreckende Stege in regelmäßigen Abständen ausgebildet, derart, dass zwischen jeweils zwei benachbarten Stegen ein Zwischenraum gebildet ist. In den Zwischenraum hineinragend ist ein nicht näher dargestellter Flügel einer nicht näher dargestellten Rotornabe des Rotors angeordnet. Der Anzahl der Zwischenräume entsprechend weist die Rotornabe eine Anzahl von Flügel auf. Somit ist mit Hilfe der Flügel jeder Zwischenraum in zwei Druckkammern teilbar. In diese Teilräume wird ein Druckmedium, im Allgemeinen ein Hydraulikfluid, mit Hilfe des Hydraulikventils 1 gesteuert eingebracht.

Jedem Arbeitsanschluss A, B ist eine Druckkammer zugeordnet. So ist dem ersten Arbeitsanschluss A die erste Druckkammer und dem zweiten Arbeitsanschluss B die zweite Druckkammer zugeordnet. Um die Winkellage zwischen der Nockenwelle und der Kurbelwelle zu verändern, wird das Druckmedium in der ersten Druckkammer oder in der zweiten Druckkammer unter Druck gesetzt, während die zweite Druckkammer bzw. die erste Druckkammer entlastet wird. Die Entlastung erfolgt über den ersten Tankanschluss T1 bzw. den zweiten Tankanschluss T2, wobei über diese Tankanschlüsse T1, T2 das Hydraulikfluid abfliesen kann.

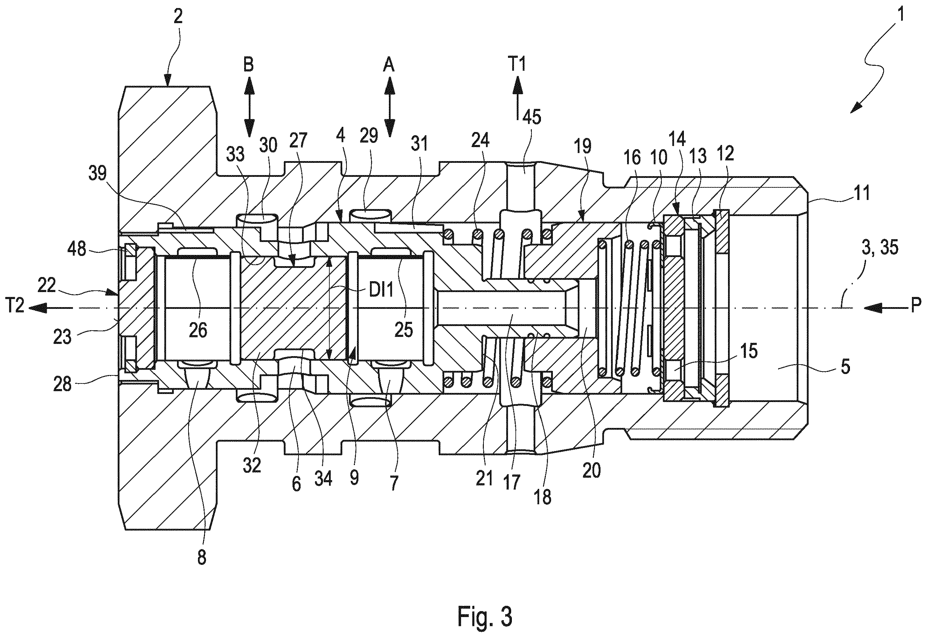

Das erfindungsgemäße Hydraulikventil 1 ist in einem Längsschnitt in Fig. 3 abgebildet. Der Kolben 4 ist hohlzylinderförmig ausgebildet und weist eine erste Durchströmöffnung 6, eine zweite Durchströmöffnung 7 und eine dritte Durchströmöffnung 8 auf. Jede Durchströmöffnung 6, 7, 8 ist den Kolben 4 vollständig durchdringend ausgeführt, so dass ausgehend von einem Innenraum 9 des Kolbens 4 das Hydraulikfluid über die Durchströmöffnungen 6, 7, 8 in die Arbeits- und Tankanschlüsse A, B, T1, T2 strömen kann. Ein Rückströmen des Fluids in den Versorgungsanschluss P ist durch ein erstes Rückschlagventil 10, welches im Bereich eines Endes 11 des Gehäuses 2 stromab eines mit Hilfe eines Sicherungselementes 12 positionsgesicherten Fluidfilters 13 im Gehäuse 2 angeordnet ist, unterbunden. Zwischen dem Rückschlagventil 10, welches als ringförmiges Rückschlagventil ausgeführt ist, und dem Fluidfilter 13 ist eine Strömungsscheibe 14 im Gehäuse 2 aufgenommen, deren Scheibenöffnungen 15 mit Hilfe des ersten Rückschlagventils 10 verschließbar sind.

Das erste Rückschlagventil 10 ist mit Hilfe eines ersten Vorspannelementes 16 in Richtung der Strömungsscheibe 14 druckbeaufschlagt. Das heißt mit anderen Worten, es wird mit Hilfe des ersten Vorspannelementes 16 zum Schließen der Scheibenöffnungen 15 gegen die Strömungsscheibe 14 gedrückt. Sobald das über den Versorgungsanschluss P strömenden Hydraulikfluid einen Druck aufweist, der größer ist als eine Vorspannkraft des ersten Vorspannelementes 16, hebt sich das erste Rückschlagventil 10 von der Strömungsscheibe 14 ab und das Hydraulikfluid tritt über die Strömungsöffnungen 14 in einen mit dem Innenraum 9 durchströmbar verbundenen Eintrittskanal 17 des Kolbens 4.

Zur Arretierung und Führung des Kolbens 4 weist dieser an seinem ersten Kolbenende 21 ein den Eintrittskanal 17 zumindest teilweise aufweisendes zapfenförmiges Führungselement 18 auf. Das Führungselement 18 ist in einem Arretierdeckel 19 eingreifend aufgenommen, welcher neben der Arretierung und Führung einer Kalibrierung des Hydraulikventils 1 dient. Des Weiteren dient der Arretierdeckel 19 einer Abstützung des ersten Vorspannelementes 16, an dessen vom ersten Rückschlagventil 10 abgewandt ausgebildeten Seite. Das Führungselement 18 ist in einer zentralen Deckelöffnung 20 des Arretierdeckels 19 eingreifend angeordnet.

Der Kolben 4 steht an seinem vom ersten Kolbenende 21 abgewandt ausgebildeten zweiten Kolbenende 28 in Wirkverbindung mit einem nicht näher dargestellten Aktuator. Am zweiten Kolbenende 28 ist ein Kolbendeckel 22 positioniert, welcher den Innenraum 9 gegen einen Austritt des Fluids verschließt. In den zweiten Tankanschluss T2 strömendes Fluid, welches aus dem zweiten Arbeitsanschluss B ausströmt, wird über einen zwischen dem Gehäuses 2 und dem Kolben 4 ausgebildeten Spalt zum zweiten Tankanschluss T2 geführt.

Des Weiteren kann ein nicht näher dargestellter Aktuatorstempel am Kolbendeckel 22 an dessen vom Innenraum 9 abgewandt ausgebildeten Deckelfläche 23 angreifen, so dass mit Hilfe des Aktuators der Kolben 4 in der Zentralöffnung 5 positioniert wird. Zur gesicherten Positionierung des Kolbens 4 ist ein zweites Vorspannelement 24 vorgesehen, welches zwischen dem Kolben 4 und dem Arretierdeckel 19 in der Zentralöffnung 5 angeordnet ist.

Das erfindungsgemäße Hydraulikventil 1 weist ein zweites Rückschlagventil 25 zur Sicherung der zweiten Durchströmöffnung 7 und ein drittes Rückschlagventil 26 zur Sicherung der dritten Durchströmöffnung 8 gegen ein Ausströmen von Hydraulikfluid aus den beiden Durchströmöffnungen 7, 8 in die Arbeitsanschlüsse A, B auf, die über eine im Gehäuse 2 ausgebildete erste Anschlussöffnung 29 bzw. eine im Gehäuse 2 ausgebildete zweite Anschlussöffnung 30 durchströmbar verbunden sind. Zur Fluidführung und Positionssicherung der beiden Rückschlagventile 25, 26 ist zwischen ihnen ein Abstandselement 27 angeordnet.

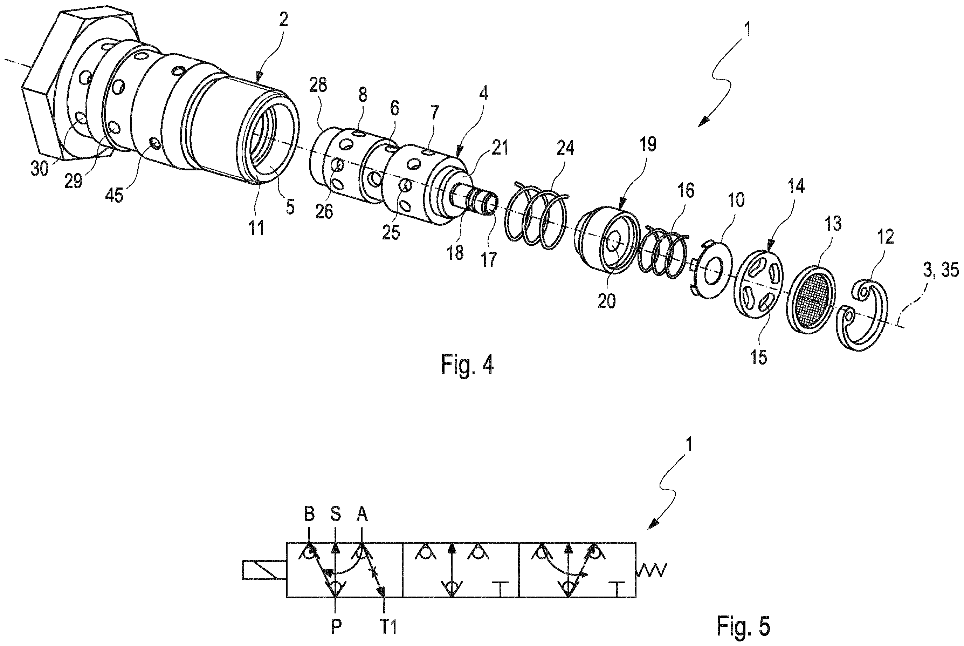

In Fig. 4 ist das erfindungsgemäße Hydraulikventil 1 des ersten Ausführungsbeispiels in einer Explosionsdarstellung abgebildet.

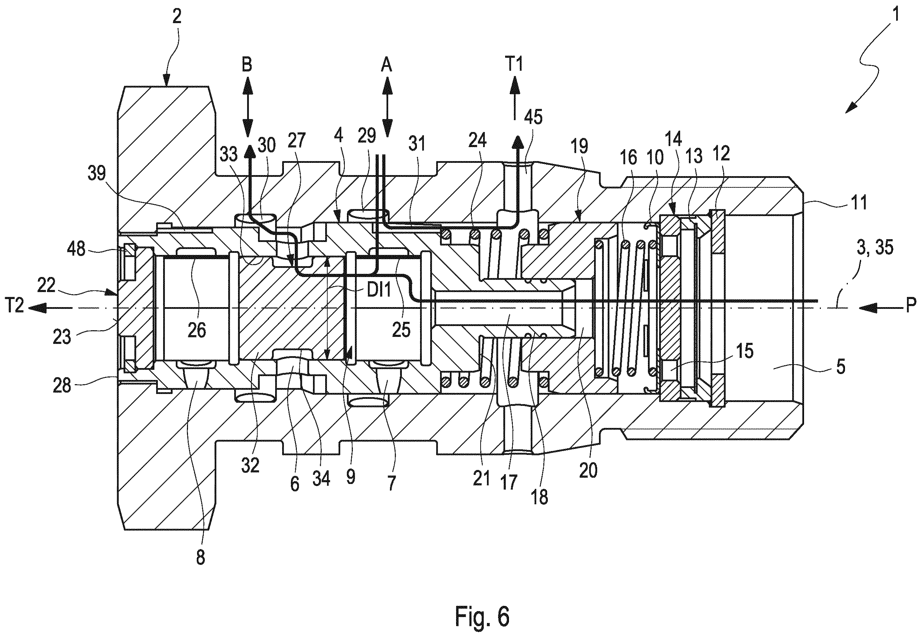

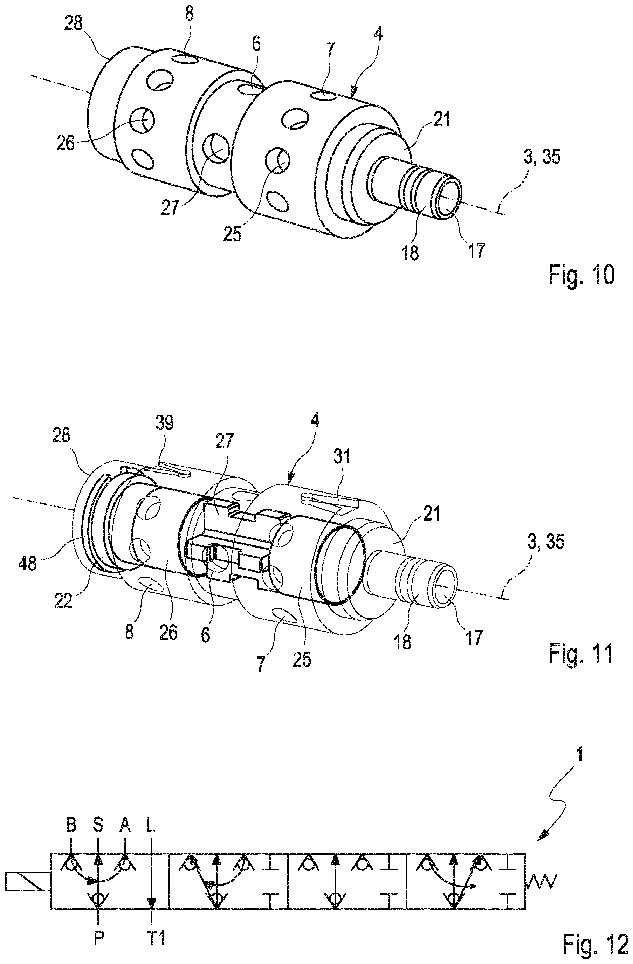

Fig. 5 zeigt das erfindungsgemäße Hydraulikventil 1 in einer symbolischen Darstellung in verschiedenen Positionen. Der in Fig. 5 dargestellte linke Abschnitt der symbolischen Darstellung, zeigt eine Durchströmung des Hydraulikventils 1 gemäß einer in Fig. 6 gezeigten ersten Position des Kolbens 4. In dieser ersten Position wird der zweite Arbeitsanschluss B mit Hydraulikfluid beaufschlagt. Das heißt mit anderen Worten, dass das Hydraulikfluid ausgehend vom Versorgungsanschluss P über den Innenraum 9 und die erste Durchströmöffnung 6 strömt, die die mit dem zweiten Arbeitsanschluss B verbundene zweite Anschlussöffnung 30 freigibt. Des Weiteren kann Hydraulikfluid aus dem ersten Arbeitsanschluss A zumindest teilweise über die erste Anschlussöffnung 29 und durch Öffnen des ersten Rückschlagventils 25 in den Innenraum 9 strömen, wobei es über das Abstandselement 27 in die erste Durchströmöffnung 6 geführt wird. Von dort strömt es weiter über die zweite Anschlussöffnung 30 in den zweiten Arbeitsanschluss B. Der aus dem ersten Arbeitsanschluss A ausströmende weitere Teil des Fluids strömt über einen ersten Ablaufkanal 31, welcher nutartig im Bereich der zweiten Durchströmöffnung 7 ausgebildet ist, in eine im Gehäuse 2 ausgebildete dritte Anschlussöffnung 45, die dem ersten Tankanschluss T1 zugeordnet ist. Der erste Ablaufkanal 31 ist insbesondere der Fig. 11 zu entnehmen.

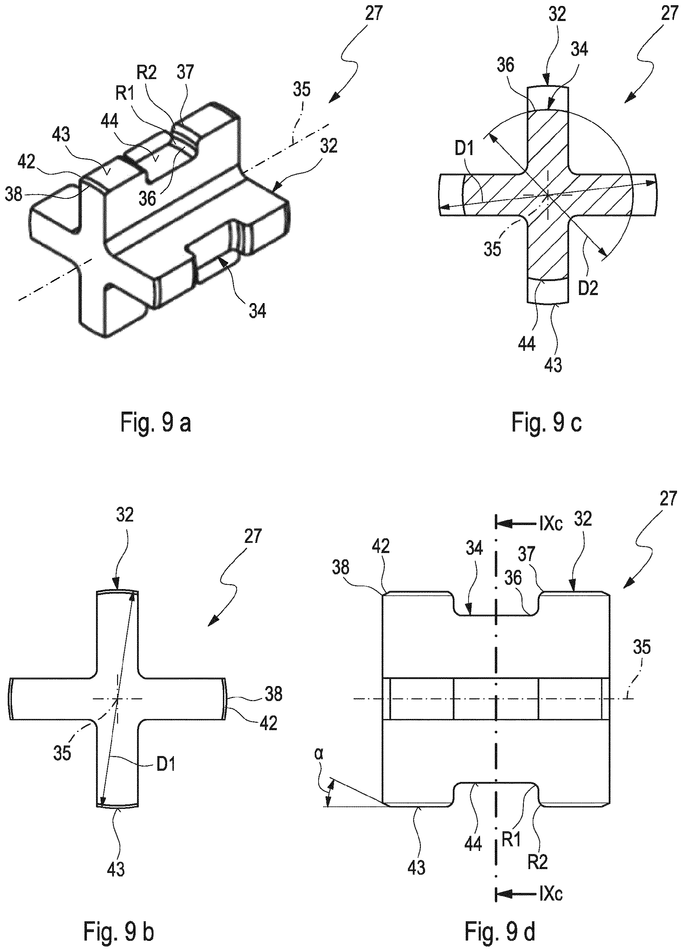

Das Abstandselement 27, welches insbesondere detailliert in den Figuren 9a) bis 9d) dargestellt ist, weist einerseits die Funktion eines Strömungsleitelementes und andererseits die Funktion eines Abstandselements auf. Es besitzt einen symmetrischen Kreuzquerschnitt, wie insbesondere Fig. c) zu entnehmen ist, welche einen Schnitt des Abstandselementes 27 entlang einer Schnittlinie IXc)-IXc) der Fig. 9b) darstellt.

Ein Überströmen des Fluids ausgehend von dem Innenraum 9 in die entsprechende Anschlussöffnung 29, 30 bzw. des entsprechenden Anschlusses A, B zur Befüllung der dem jeweiligen Anschluss A, B zugeordneten Druckkammer, erfolgt ausschließlich über die erste Durchströmöffnung 6. Da im vorliegenden Ausführungsbeispiel die Durchströmöffnung 6 vier Teilöffnungen aufweist, umfasst das Abstandselement 27 vier in einem rechten Winkel zueinander angeordnete Trennstege 32. Die Trennstege 32 sind dazu ausgestaltet in dem zylinderförmigen Innenraum 9 vier Strömungskanäle auszubilden, um somit jeder Teilöffnung einen durch die erste Durchströmöffnung 6 durchströmenden Fluidteil zur Verfügung zu stellen. Dadurch kann eine Reaktionszeit der Befüllung der entsprechenden Druckkammer wesentlich reduziert werden.

Die Trennstege 32 sind an eine den Innenraum 9 begrenzende Innenwand 33 des Kolbens 4 anliegend ausgebildet. Zur teilweisen Überströmung des Fluidteils in die entsprechende Teilöffnung der Durchströmöffnung 6 weist der Trennsteg 32 eine Vertiefung 34 auf.

Die Vertiefung 34 besitzt zur Vermeidung möglicher Strömungsabrisse an ihren einer zweiten Längsachse 35 des Abstandselementes 27 zugewandt ausgebildeten Innenflächenkanten 36 einen ersten Radius R1 sowie an ihren von der zweiten Längsachse 35 abgewandt ausgebildeten Außenflächenkanten 37 einen zweiten Radius R2. Bevorzugt sind die beiden Radien aus insbesondere fertigungstechnischen Gründen gleich groß. Ebenso könnten sie allerdings dem entsprechenden Einsatzgebietes des Hydraulikventils 1 angepasst und verschieden groß ausgeführt sein.

Zur verbesserten Einführung des Abstandselementes 27 in den Innenraum 9 bei der Montage des Hydraulikventils 1 besitzen die Trennstege 32 an ihren Seitenflächenkanten 38 jeweils eine Fase 42 mit einem Winkel α, bevorzugt mit einem Wert von 15°.

Das Abstandselement 27 weist der Innenwand 33 zugewandt ausgebildete, gewölbte Außenflächen 43 mit einem Außendurchmesser D1 auf, welcher einem Innendurchmesser DI1 des Kolbens 4 angepasst ausgeführt ist. Zur Herbeiführung eines vorteilhaften Strömungsverhaltens des Fluids weisen die Innenflächen 44 der Vertiefungen 34 einen Durchmesser D2 auf und sind somit diesem Durchmesser D2 entsprechend angepasst gewölbt ausgestaltet.

Insgesamt ist das Abstandselement durch die ausgebildeten Radien R1, R2 und der gewölbten Flächen 43, 44 strömungsoptimiert gestaltet, da ein an scharfen Kanten übliches Abreißen der Strömung zumindest reduziert ist.

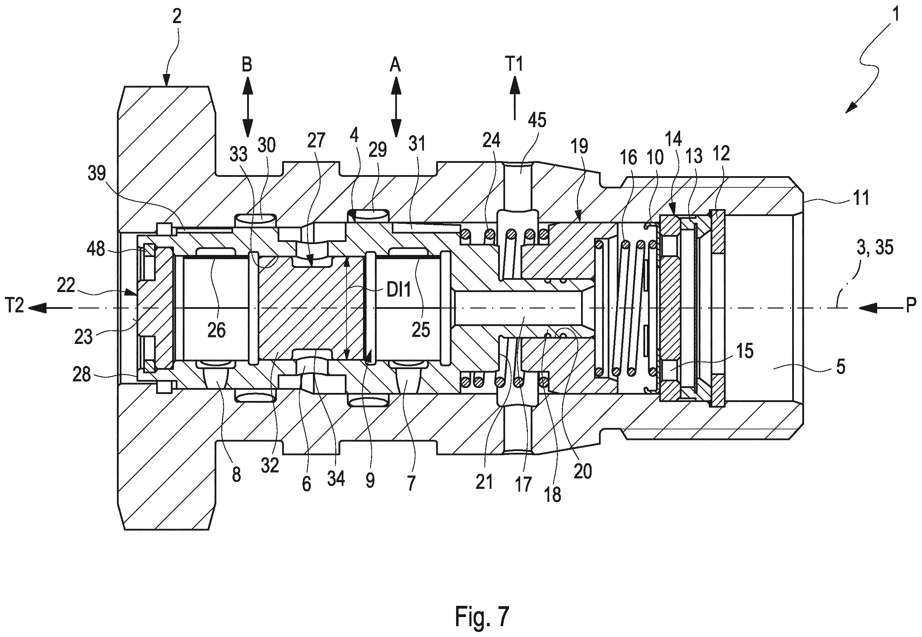

Im mittleren Abschnitt des symbolisch dargestellten Hydraulikventils 1 ist die Durchströmung des Hydraulikventils 1 in einer zweiten Position des Kolbens 4 symbolisch abgebildet, die der in Fig. 7 dargestellten Kolbenposition entspricht. In dieser zweiten Position erfolgt keine Durchströmung der Arbeitsanschlüsse A, B.

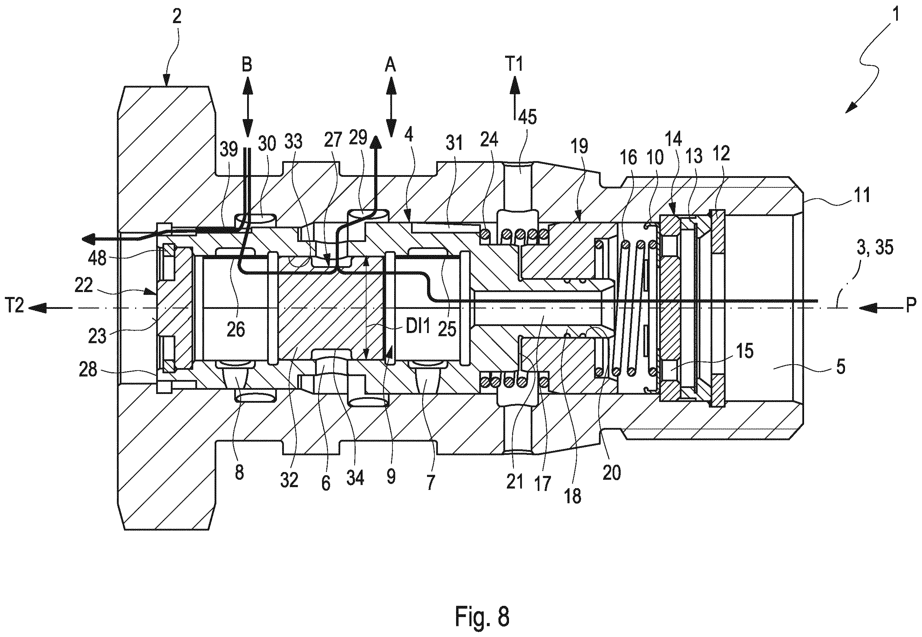

Eine dritte Position des Kolbens 4 ist in Fig. 8 abgebildet und entspricht in der symbolischen Darstellung der im rechten Abschnitt der Fig. 5 dargestellten Durchströmung. In dieser Position wird der erste Arbeitsanschluss A mit Hydraulikfluid beaufschlagt. Das heißt mit anderen Worten, dass das Hydraulikfluid ausgehend vom Versorgungsanschluss P über den Innenraum 9 und die erste Durchströmöffnung 6 strömt, die die mit dem ersten Arbeitsanschluss A verbindbare erste Anschlussöffnung 29 freigibt. Des Weiteren kann Hydraulikfluid aus dem zweiten Arbeitsanschluss B zumindest teilweise über die zweiten Anschlussöffnung 30 und durch Öffnen des zweiten Rückschlagventils 26 in den Innenraum 9 strömen, wobei es über das Abstandselement 27 in die erste Durchströmöffnung 6 geführt wird. Von dort strömt es weiter über die erste Anschlussöffnung 29 in den ersten Arbeitsanschluss A.

Der aus dem zweiten Arbeitsanschluss B ausströmende weitere Teil des Fluids strömt über einen zweiten Ablaufkanal 39, welcher nutartig im Bereich der dritten Durchströmöffnung 8 ausgebildet ist, in den zweiten Tankanschluss T2. Der zweite Ablaufkanal 39 ist insbesondere der Fig. 11 zu entnehmen. In den Figuren 10 und 11 ist zur weiteren Verdeutlichung der Kolben 4 dargestellt.

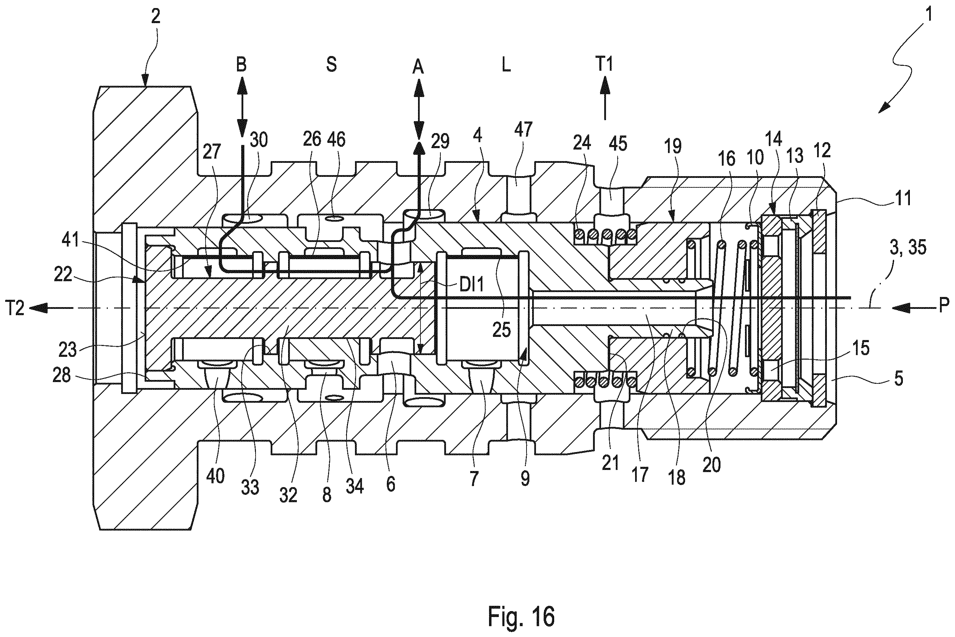

Das erfindungsgemäße Hydraulikventil 1 kann ebenso als Hydraulikventil 1 mit einer so genannten Mittenpositionsverriegelung ausgebildet werden, wie ein zweites Ausführungsbeispiel gem. der Figuren 12 bis 16 zeigt. Unter einer so genannten Mittenpositionsverriegelung ist eine Verriegelung des Rotors mit dem Stator zu verstehen, welche ohne eine elektrische Steuerung herbeigeführt werden kann. Hier zu weist das Hydraulikventil 1 zusätzlich zu den bisher aus dem ersten Ausführungsbeispiel bekannten Arbeitsanschlüssen A, B weitere durchströmbare Anschlüsse auf. Diese weiteren Anschlüsse, ein erster Verriegelungsanschluss S und ein zweiter Verriegelungsanschluss L, sind zur Beaufschlagung eines Verriegelungssystems des Schwenkmotorherstellers vorgesehen. Diese Verriegelungsanschlüsse S, L sind üblicherweise aufgrund fertigungstechnischer und bautechnischer Vorteile, seriell mit den Arbeitsanschlüssen A, B entlang der ersten Längsachse 3 des Gehäuses 2 angeordnet. Dadurch ergibt sich zwangsläufig eine größere Erstreckung des Gehäuses 2 entlang seiner ersten Längsachse 3. Mit anderen Worten heißt dies, dass das Hydraulikventil 1 eine größere Baulänge aufweist als ein vergleichbares Hydraulikventil 1 ohne Mittenpositionsverriegelung.

Fig. 12 zeigt in einem zweiten Ausführungsbeispiel das erfindungsgemäße Hydraulikventil 1 mit der so genannten Mittenpositionsverriegelung in einer symbolischen Darstellung in verschiedenen Positionen.

Eine Folge der seriellen Anordnung der Verriegelungsanschlüsse S, L ist ein größerer Arbeitsweg des Kolbens 4 bzw. ein verlängerter Hubweg des Kolbens 4. Damit die Anschlüsse A, B, T1, T2, S, L zur Nockenwellenverstellung funktionsgerecht durchströmt werden, ist es erforderlich dem zweiten Arbeitsanschluss B eine zusätzliche Durchströmöffnung, im Weiteren als vierte Durchströmöffnung 40 bezeichnet, im Kolben 4 zuzuordnen. Je nach Positionierung der Arbeitsanschlüsse A, B könnte auch dem ersten Arbeitsanschluss A die zusätzliche Durchströmöffnung zugeordnet werden. Dies ist von der Bauweise des Hydraulikventils 1 abhängig.

Zur Vermeidung einer Durchströmung dieser vierten Durchströmöffnung 40 ausgehend aus dem Innenraum 9 ist dieser Durchströmöffnung 40 ebenfalls ein Rückschlagventil, ein viertes Rückschlagventil 41, zugeordnet. An dieser Stelle sei erwähnt, dass die im Kolben 4 aufgenommenen Rückschlagventile 25, 26, 41 als bandförmige Rückschlagventile ausgebildet sind.

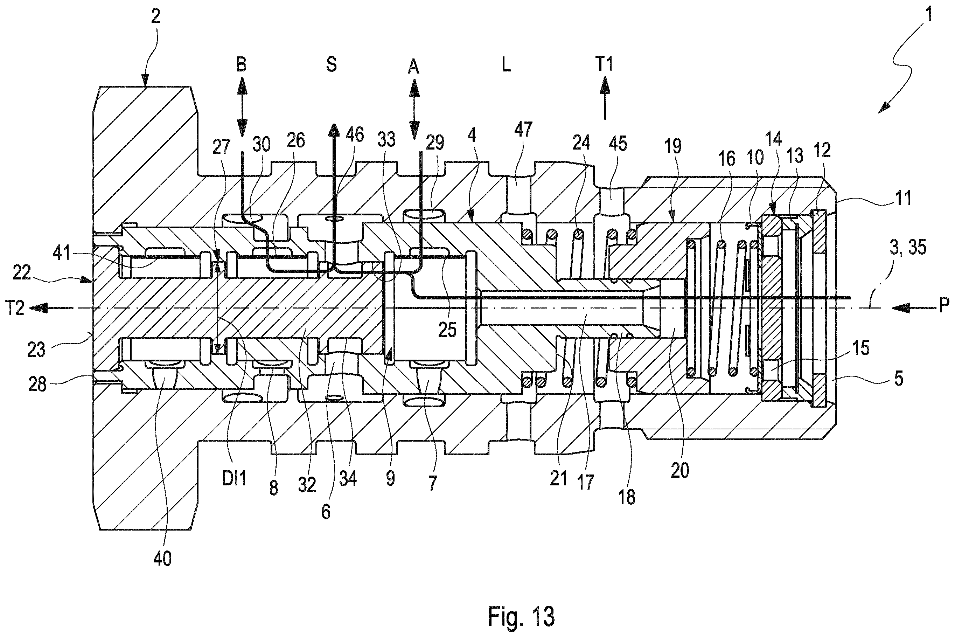

Der in Fig. 12 abgebildete linke Abschnitt der symbolischen Darstellung entspricht einer Durchströmung des Hydraulikventils 1 gemäß einer in Fig. 13 gezeigten ersten Position des Kolbens 4. In dieser ersten Position wird der erste Verriegelungsanschluss S mit Hydraulikfluid beaufschlagt. D.h. mit anderen Worten, dass das Hydraulikfluid ausgehend vom Versorgungsanschluss P über den Innenraum 9 und die erste Durchströmöffnung 6, über eine im Gehäuse 2 ausgebildete vierte Anschlussöffnung 46 in den ersten Verriegelungsanschluss S strömt. Zugleich werden die beiden Druckkammern, welche dem ersten Arbeitsanschluss A und dem zweiten Arbeitsanschluss B zugeordnet sind, zumindest teilweise entleert, derart, dass das Hydraulikfluid aus diesen Druckkammern über die Arbeitsanschlüsse A, B und deren zugeordneten Anschlussöffnungen 29, 30 unter Beaufschlagung der Rückschlagventile 25, 26 in den Innenraum 9 und von dort über die erste Durchströmöffnung 6 in den ersten Verriegelungsanschluss S strömt. Zeitgleich dazu entleert sich das Verriegelungssystem über den zweiten Verriegelungsanschluss L, welchem eine fünfte Anschlussöffnung 47 im Gehäuse 2 zugeordnet ist, in den ersten Tankanschluss T1.

Der Trennsteg 32 des Abstandselementes 27 des zweiten Ausführungsbeispiels weist drei entlang der zweiten Längsachse 35 seriell angeordnete Vertiefungen 34 auf. Dies ist notwendig, damit die dritte Durchströmöffnung 8 und die vierte Durchströmöffnung 40 durchströmbar sind. Der Vorteil dieser Variante des Abstandselementes 27 ist darin zu sehen, dass der Kolbendeckel 22 einstückig mit dem Abstandselement 27 ausgebildet werden kann, wie es im vorliegenden zweiten Ausführungsbeispiel der Fall ist. Dadurch vereinfacht sich die Montage des Kolbens 4.

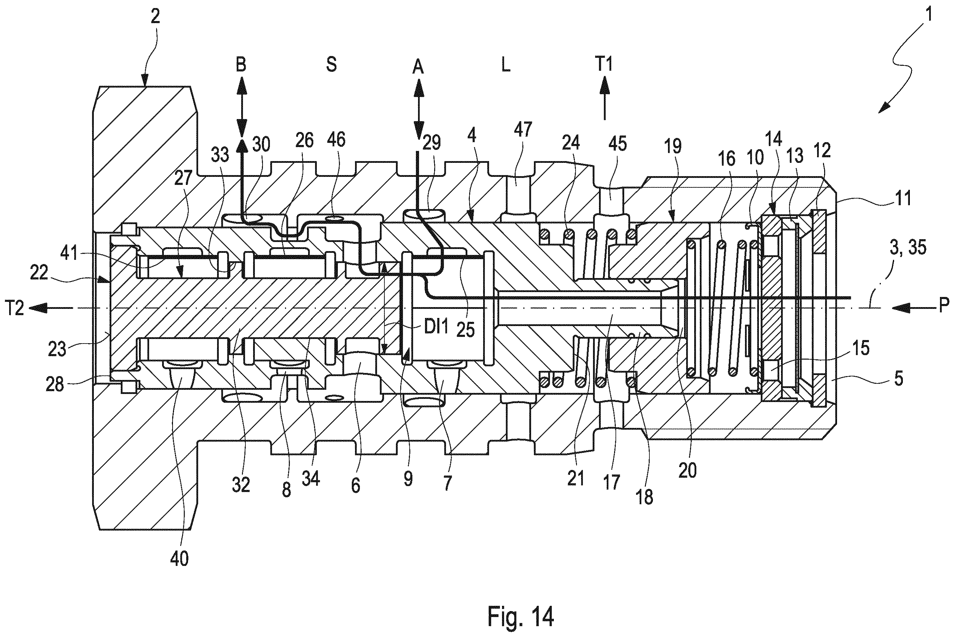

Während einer Verschwenkphase des Rotor gegenüber dem Stator, in der die dem zweiten Arbeitsanschluss B zugeordnete Druckkammer mit Hydraulikfluid befüllt wird, ist der Kolben 4 wie in Fig. 14 dargestellt positioniert. Das Hydraulikfluid strömt ausgehend vom Versorgungsanschluss P über den Innenraum 9 und die erste Durchströmöffnung 6, welche mit dem zweiten Arbeitsanschluss B durchströmbar verbunden ist, wobei die zweite Anschlussöffnung 30 freigegeben ist. Des Weiteren kann Hydraulikfluid aus dem ersten Arbeitsanschluss A zumindest teilweise über die ersten Anschlussöffnung 29 und durch Öffnen des ersten Rückschlagventils 25 in den Innenraum 9 strömen, wobei es über das Abstandselement 27 in die erste Durchströmöffnung 6 geführt wird. Von dort strömt es weiter über die zweite Anschlussöffnung 30 in den zweiten Arbeitsanschluss B. Die übrigen Anschlüsse S, L sind mit Hilfe des Kolbens 4 versperrt.

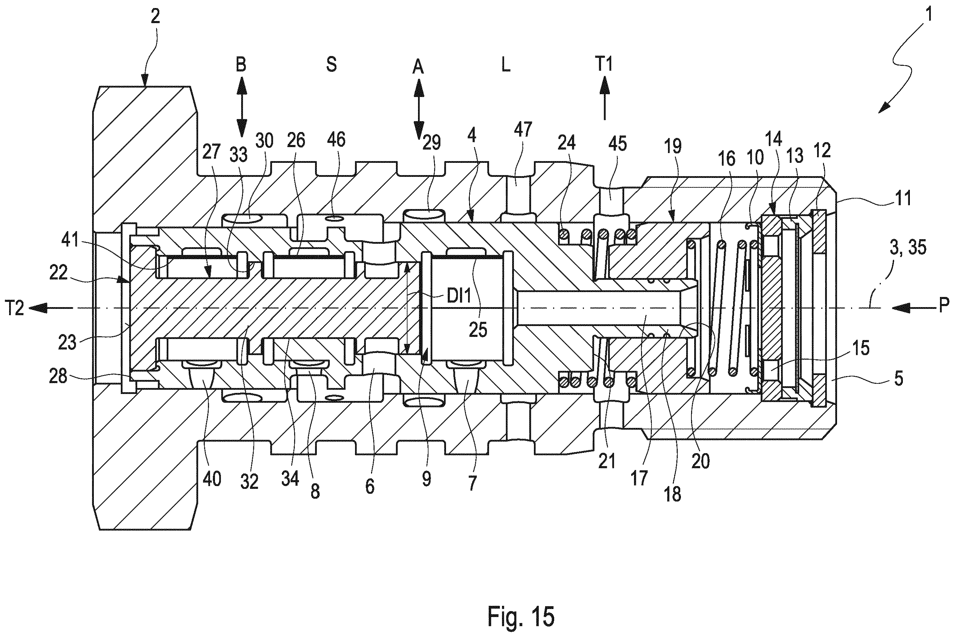

Der Kolben 4 befindet sich in einer so genannten Ruheposition, sofern sowohl der erste Arbeitsanschluss A als auch der zweite Arbeitsanschluss B versperrt ist. Diese Position, im Weiteren als dritte Position bezeichnet ist in Fig. 15 dargestellt, bzw. ist in der symbolischen Darstellung im zweiten Abschnitt von rechts abgebildet.

In einer vierten Position befindet sich der Kolben 4 zur Durchströmung des ersten Arbeitsanschlusses A, wobei die erste Anschlussöffnung 29 von der ersten Durchströmöffnung 6 freigegeben wird. In dieser Position erfolgt eine Befüllung der dem ersten Arbeitsanschluss A zugeordneten Druckkammer, unter Entleerung der dem zweiten Arbeitsanschluss B zugeordneten Druckkammer. Das Hydraulikfluid strömt ausgehend vom Versorgungsanschluss P über den Innenraum 9 und die erste Durchströmöffnung 6, welche mit dem ersten Arbeitsanschluss A durchströmbar verbunden ist, wobei die erste Anschlussöffnung 29 freigegeben ist. Des Weiteren kann Hydraulikfluid aus dem zweiten Arbeitsanschluss B zumindest teilweise über die zweite Anschlussöffnung 30 und durch Öffnen des vierten Rückschlagventils 41 in den Innenraum 9 strömen, wobei es mit Hilfe des Abstandselements 27 über das dritte Rückschlagventil 26 in die erste Durchströmöffnung 6 geführt wird. Von dort strömt es weiter über die erste Anschlussöffnung 29 in den ersten Arbeitsanschluss A. Die übrigen Anschlüsse S, L sind mit Hilfe des Kolbens 4 versperrt.

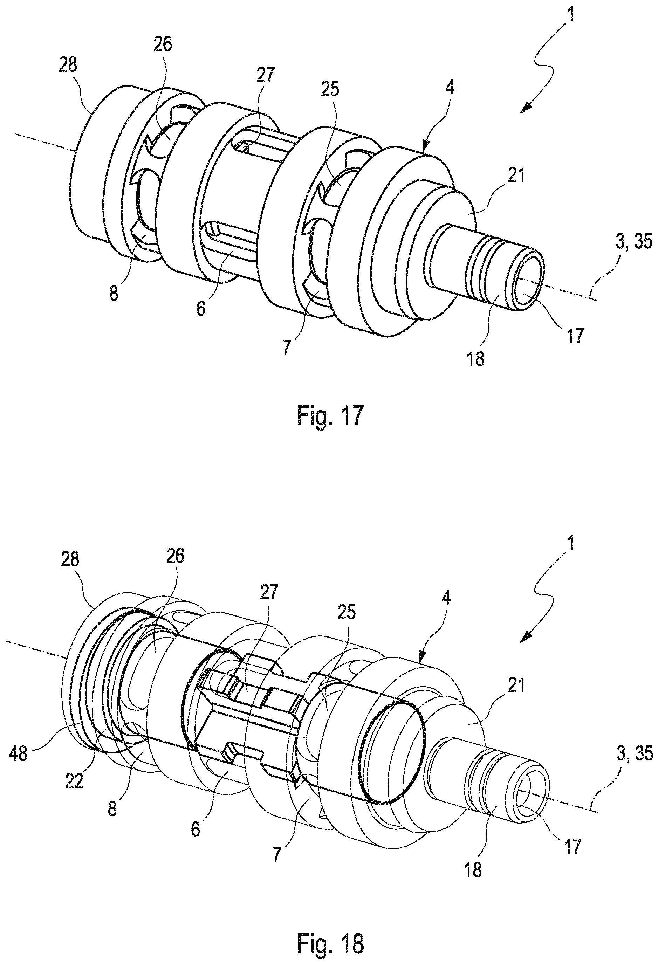

In den Figuren 17 und 18 ist das erfindungsgemäße Hydraulikventil 1 in einem dritten Ausführungsbeispiel dargestellt, wobei die Durchströmöffnungen 6, 7, 8 in Form von Langlöchern ausgeführt sind. Der Kolbendeckel 22 ist mit Hilfe eines weiteren Sicherungselementes 48 in Form eines Sprengringes am Kolben 4 gesichert.

## Patentansprüche

1. Hydraulikventil für einen Schwenkmotorversteller einer Nockenwelle, umfassend ein Gehäuse (2) und einen sich entlang einer ersten Längsachse (3) des Gehäuses (2) erstreckenden Zentralöffnung (5) axial bewegbaren Kolben (4), wobei der Kolben (4) hohlzylinderförmig ausgeführt ist, und wobei der Kolben (4) in einer sich entlang einer ersten Längsachse (3) eines Gehäuses (2) des Hydraulikventils (1) erstreckenden Zentralöffnung (5) axial bewegbar ist, wobei entsprechend einer Positionierung des Kolbens (4) insbesondere Arbeitsanschlüsse (A, B) des Gehäuses (2) geöffnet und gesperrt werden, und wobei der Kolben (4) zur Vermeidung eines unerwünschten Ausströmens eines den Kolben (4) durchströmenden Hydraulikfluids aus einem Innenraum (9) des Kolbens (4) in den Arbeitsanschlüssen (A, B) zugeordneten Durchströmöffnungen (29, 30) des Kolbens (4) Rückschlagventile (25, 26) aufweist, wobei die Rückschlagventile (25, 26) im Innenraum (9) des Kolbens (4) angeordnet und mit Hilfe eines Abstandelements (27) fixiert sind, und wobei die Rückschlagventile (25, 26) als in Richtung des Innenraumes (9) öffnende Rückschlagventile (25, 26) ausgebildet sind und **dadurch gekennzeichnet, dass** das Abstandselement (27) einen kreuz- oder sternförmigen Querschnitt aufweist.

2. Kolben nach Anspruch 1,
**dadurch gekennzeichnet, dass**
die Rückschlagventile (25, 26) bandförmig ausgebildet sind.

3. Hydraulikventil nach Anspruch 1 oder 2,
**dadurch gekennzeichnet, dass**
das Abstandselement (27) zumindest einen Trennsteg (32) aufweist.

4. Hydraulikventil nach Anspruch 3,
**dadurch gekennzeichnet, dass**
der Trennsteg (32) eine Vertiefung (34) aufweist.

5. Hydraulikventil nach Anspruch 4,
**dadurch gekennzeichnet, dass**
die Vertiefung (34) eine in Umfangsrichtung gebogene Innenfläche aufweist.

6. Hydraulikventil nach einem der vorhergehenden Ansprüche,
**dadurch gekennzeichnet, dass**
das Abstandselement (27) an zumindest einer Seitenflächenkante (38) eine Fase (42) aufweist oder die Seitenflächenkante (38) abgerundet ausgeführt ist.

7. Hydraulikventil nach Anspruch 6,
**dadurch gekennzeichnet, dass**
die Fase einen Winkel (α) mit einem Wert von 15° aufweist.

8. Hydraulikventil nach einem der vorhergehenden Ansprüche,
**dadurch gekennzeichnet, dass**
eine Außenfläche (43) des Abstandselementes (27) einem Innendurchmesser (DI1) des Kolbens (4) angepasst ausgebildet ist.

9. Hydraulikventil nach einem der vorhergehenden Ansprüche,
**dadurch gekennzeichnet, dass**
das Abstandselement (27) einen Kolbendeckel (22) umfasst.

10. Hydraulikventil nach einem der vorangegangenen Ansprüche,
**dadurch gekennzeichnet, dass**
der Versorgungsanschluss (P) an einem Ende (11) des rohrformartig ausgebildeten Gehäuses (2) angeordnet ist.

11. Hydraulikventil nach Anspruch 10,
**dadurch gekennzeichnet, dass**
das Hydraulikventil (1) weitere Anschlussöffnungen (46, 47) zur Regelung eines Schwenkmotorverstellers mit einer Mittenpositionsverriegelung aufweist.

12. Schwenkmotorversteller mit einem Hydraulikventil nach einem der Ansprüche 1 bis 11.

## Claims

1. Hydraulic valve for a pivoting motor adjuster of a camshaft, comprising a housing (2) and a piston (4) axially movable along a central opening (5) extending along a first longitudinal axis (3) of the housing (2), the piston (4) being hollow-cylindrical and the piston (4) being axially movable along a central opening (5) extending along a first longitudinal axis (3) of a housing (2) of the hydraulic valve (1), in particular operating connections (A, B) of the housing (2) being opened and closed in accordance with a positioning of the piston (4), and the piston (4) having non-return valves (25, 26) assigned to passage openings (29, 30) of the piston (4) in order to avoid an unintentional outflow of a hydraulic fluid flowing through the piston (4) from an interior (9) of the piston (4) into the operating connections (A, B), the non-return valves (25, 26) being arranged in the interior (9) of the piston (4) and being fixed with the aid of a spacer element (27), and the non-return valves (25, 26) being formed as non-return valves (25, 26) opening in the direction of the interior (9), **characterized in that** the spacer element (27) has a cross-shaped or star-shaped cross section.

2. Piston according to Claim 1,
**characterized in that**
the non-return valves (25, 26) are strip-like.

3. Hydraulic valve according to Claim 1 or 2,
**characterized in that**
the spacer element (27) has at least one dividing web (32).

4. Hydraulic valve according to Claim 3,
**characterized in that**
the dividing web (32) has a recess (34).

5. Hydraulic valve according to Claim 4,
**characterized in that**
the recess (34) has an inner surface that is curved in the circumferential direction.

6. Hydraulic valve according to one of the preceding claims,
**characterized in that**
the spacer element (27) has a chamfer (42) on at least one side surface edge (38), or the side surface edge (38) is rounded.

7. Hydraulic valve according to Claim 6,
**characterized in that**
the chamfer has an angle (α) with a value of 15°.

8. Hydraulic valve according to one of the preceding claims,
**characterized in that**
an outer surface (43) of the spacer element (27) is matched to an internal diameter (DI1) of the piston (4).

9. Hydraulic valve according to one of the preceding claims,
**characterized in that**
the spacer element (27) comprises a piston cover (22) .

10. Hydraulic valve according to one of the preceding claims,
**characterized in that**
the supply connection (P) is arranged at one end (11) of the tubular housing (2).

11. Hydraulic valve according to Claim 10,
**characterized in that**
the hydraulic valve (1) has further connecting openings (46, 47) for controlling a pivoting motor adjuster with a central position interlock.

12. Pivoting motor adjuster having a hydraulic valve according to one of Claims 1 to 11.

## Revendications

1. Soupape hydraulique destinée à un régleur à moteur pivotant d'un arbre à cames, la soupape comprenant un boîtier (2) et un piston (4) qui se déplace axialement dans une ouverture centrale (5) s'étendant le long d'un premier axe longitudinal (3) du boîtier (2), le piston (4) étant conçu comme un cylindre creux, et le piston (4) pouvant se déplacer axialement dans une ouverture centrale (5) s'étendant le long d'un premier axe longitudinal (3) d'un boîtier (2) de la soupape hydraulique (1), des raccords de travail (A, B) du boîtier (2) étant en particulier ouverts et verrouillés selon le positionnement du piston (4) et le piston (4) comportant des soupapes anti-retour (25, 26) destinées à empêcher un écoulement indésirable d'un fluide hydraulique, s'écoulant à travers le piston (4), depuis un espace intérieur (9) du piston (4) jusque dans des ouvertures d'écoulement (29, 30) du piston (4) qui sont associées aux raccords de travail (A, B), les soupapes anti-retour (25, 26) étant disposées à dans l'espace intérieur (9) du piston (4) et étant fixées à l'aide d'un élément d'espacement (27), et les soupapes anti-retour (25, 26) étant conçues comme des soupapes anti-retour (25, 26) qui s'ouvrent en direction de l'espace intérieur (9) et **caractérisée en ce que** l'élément d'espacement (27) a une section transversale en forme de croix ou d'étoile.

2. Piston selon la revendication 1,
**caractérisé en ce que**
les soupapes anti-retour (25, 26) sont en forme de bande.

3. Soupape hydraulique selon la revendication 1 ou 2,
**caractérisée en ce que**
l'élément d'espacement (27) comporte au moins une nervure de séparation (32).

4. Soupape hydraulique selon la revendication 3,
**caractérisée en ce que**
la nervure de séparation (32) comporte un évidement (34).

5. Soupape hydraulique selon la revendication 4,
**caractérisée en ce que**
l'évidement (34) comporte une surface intérieure qui est incurvée dans la direction circonférentielle.

6. Soupape hydraulique selon l'une des revendications précédentes, **caractérisée en ce que** l'élément d'espacement (27) comporte un chanfrein (42) sur au moins un bord de surface latérale (38) ou le bord de surface latérale (38) est réalisé de manière à être arrondi.

7. Soupape hydraulique selon la revendication 6,
**caractérisée en ce que**
le chanfrein fait un angle (α) d'une valeur de 15°.

8. Soupape hydraulique selon l'une des revendications précédentes,
**caractérisée en ce que**
une surface extérieure (43) de l'élément d'espacement (27) est conçue pour être adaptée à un diamètre intérieur (DI1) du piston (4).

9. Soupape hydraulique selon l'une des revendications précédentes,
**caractérisée en ce que**
l'élément d'espacement (27) comprend un capot de piston (22).

10. Soupape hydraulique selon l'une des revendications précédentes,
**caractérisée en ce que**
le raccord d'alimentation (P) est disposé à une extrémité (11) du boîtier tubulaire (2).

11. Soupape hydraulique selon la revendication 10,
**caractérisée en ce que**
la soupape hydraulique (1) comprend d'autres ouvertures de raccordement (46, 47) destinées à réguler un régleur à moteur pivotant pourvu d'un verrouillage en position médiane.

12. Régleur à moteur pivotant comprenant une soupape hydraulique selon l'une des revendications 1 à 11.
